# EUROPEAN PATENT APPLICATION

(11) **EP 4 443 619 A1**
(43) Date of publication of application: **09.10.2024**
(21) Application number: 24165788.1
(22) Date of filing: 25.03.2024
(51) Int. Cl.: H01M 50/204, B60L 50/64, H01M 50/249, H01M 50/271, H01M 50/358, H01M 50/367

(54) **BATTERY PACK AND VEHICLE**

(30) Priority: 05.04.2023 JP 2023061298
(71) Applicant: Yamaha Hatsudoki Kabushiki Kaisha, Iwata-shi, Shizuoka 438-8501 (JP)
(72) Inventor: NAGAO, Tokinari, Iwata-shi, 4388501 (JP)
(74) Representative: Studio Torta S.p.A.

(57) **Abstract**

There is disclosed a battery pack (3) including a battery module (32), and a casing (31) that houses the battery module (32); the battery module (32) being arranged with an interval between the battery module (32) and a first surface (311) of the casing (31) opposing the battery module (32) so as to form a first gas passageway (71) between the battery module (32) and the first surface (311); an outlet (35) through which to discharge the gas inside the casing (31) being located on the first surface (311); the battery pack (3) further including a first wall portion (51) extending from the first surface (311) where the outlet (35) is located, the first wall portion (51) being shaped so as to extend in a direction away from the first surface (311) while extending toward the upstream side of the first gas passageway (71).

## Description

### TECHNICAL FIELD

The present invention relates to a battery pack and a vehicle.

### PRIOR ART

There are electric vehicles that run on an electric motor as a drive source. The electric motor rotates by receiving electric power from a battery pack mounted on the vehicle, and the rotation of the electric motor is transmitted to the wheels to enable the vehicle to run.

A plurality of battery cells are arranged inside a battery pack. When the pressure inside the battery cells increases, gas may be discharged from the battery cells. The casing of the battery pack is provided with an outlet through which to discharge the gas inside the casing to the outside. The gas discharged from the battery cells is discharged to the outside of the battery pack through the outlet. As the gas generated from the battery cells flows toward the outlet, particulate matter derived from the constituents of the battery cells may move together with the gas toward the outlet.

International Publication WO2019/176415 pamphlet discloses a battery pack having an exhaust duct provided inside the casing for discharging the gas generated from battery cells to the outside. The exhaust duct has a rectangular cross section, and a plurality of exhaust guide members extend from each of two opposing inner surfaces of the exhaust duct. The particulate matter described above can be captured by those exhaust guide members.

### DESCRIPTION OF THE INVENTION

When solid objects occur that move in the casing of a battery pack, it is required to efficiently capture the objects.

The present specification discloses a battery pack and a vehicle as set forth in the following items.

### [Item 1]

A battery pack including:
a battery module; and
a casing that houses the battery module, wherein:
   the battery module is arranged with an interval from a first surface of the casing opposing the battery module so as to form a first gas passageway between the battery module and the first surface of the casing;
   an outlet through which to discharge gas inside the casing to outside is located on the first surface of the casing; and
   the battery pack further includes a first wall portion extending from the first surface of the casing where the outlet is located, the first wall portion being shaped so as to extend in a direction away from the first surface while extending toward an upstream side of the first gas passageway.

The battery pack according to an embodiment of the present invention includes the first wall portion that extends from the first surface of the casing where the outlet is located. The first wall portion is shaped so as to extend in a direction away from the first surface of the casing while extending toward the upstream side of the first gas passageway. When solid objects derived from the constituents of the battery cells occur, it is possible to capture those solid objects by the first wall portion.

Many components are required to be arranged inside the casing of the battery pack. Therefore, the interval can be small between the first surface of the casing opposing the battery module and the battery module. The length of the first surface of the casing in the width direction is larger relative to the interval. With the length of the first surface of the casing in the width direction being large, the length of the root portion of the wall portion fixed to the first surface can be made large, thereby increasing the rigidity of the wall portion. For example, if the wall portion has a cantilevered structure, the length of the fixed end that is fixed to the first surface of the casing can be made large, thereby increasing the rigidity of the wall surface. Therefore, even under conditions where high stress is applied to the wall portion due to the movement of the gas and the solid objects, it is possible to suppress distortion of the wall portion and efficiently capture the solid objects.

With the provision of the wall portion for capturing the solid objects in the casing of the battery pack, it is possible to efficiently capture the solid objects with a simple structure. Since there is no need to provide relatively large components such as an exhaust duct in the casing, it is possible to increase the degree of freedom in the arrangement of components in the casing and reduce the size of the battery pack.

### [Item 2]

The battery pack according to item 1, wherein:
in plan view as seen from a width direction of the first surface of the casing,
the first wall portion is shaped so as to extend in a direction diagonal to an axial direction of the outlet and away from the first surface.

Thus, solid objects that move through the first gas passageway can be captured by the first wall portion.

### [Item 3]

The battery pack according to item 1 or 2, wherein the first wall portion includes:
a first portion shaped such that one end thereof extends from the first surface of the casing and so as to extend away from the first surface while extending toward the upstream side of the first gas passageway; and
a second portion that extends from the other end of the first portion in a direction toward the upstream side of the first gas passageway, with inclination of the second portion relative to the first surface being smaller than inclination of the first portion relative to the first surface.

Thus, it is possible to increase the space to capture the solid objects.

### [Item 4]

The battery pack according to any one of items 1 to 3, further including:
a baffle plate arranged between the battery module and the first surface of the casing, wherein:
the first gas passageway is formed between the baffle plate and the first surface of the casing; and
the first wall portion is arranged so as to provide a gap between the first wall portion and the baffle plate.

Thus, it is possible to prevent the solid objects discharged from the battery module from heading directly to the outlet without passing through the location where the first wall portion is arranged to capture those solid objects. It is possible to guide those solid objects to a location where the first wall portion is arranged.

### [Item 5]

The battery pack according to item 4, further including a second wall portion that extends from a second surface of the baffle plate opposing the first surface of the casing, wherein the second wall portion is shaped so as to extend away from the second surface while extending toward the upstream side of the first gas passageway and is provided so as to provide a gap between the second wall portion and the first surface of the casing.

As the solid objects are captured by means of both the first wall portion and the second wall portion, which extend in different directions, it is possible to more efficiently capture the solid objects.

### [Item 6]

The battery pack according to item 5, wherein the first wall portion and the second wall portion are arranged staggered from each other in a longitudinal direction of the first surface of the casing.

Thus, it is possible to efficiently capture the solid objects, which have a relatively large mass and are difficult to change their direction of travel.

### [Item 7]

The battery pack according to any one of items 4 to 6, wherein:
a control device that controls an operation of the battery pack,
wherein the control device is provided on the baffle plate.

Thus, the control device can be supported by the baffle plate.

### [Item 8]

The battery pack according to any one of items 1 to 3, wherein:
a second gas passageway, separate from the first gas passageway, is further formed between the first surface of the casing and the battery module, wherein the second gas passageway has a different direction of gas flow than the first gas passageway; and
the battery pack further includes a third wall portion that extends from the first surface of the casing where the outlet is located, the third wall portion being shaped so as to extend in a direction away from the first surface while extending toward the upstream side of the second gas passageway.

By providing a plurality of gas passageways to guide the gas inside the casing to the outlet, it is possible to efficiently guide the gas in the casing to the outlet.

By arranging wall portions in the first gas passageway and the second gas passageway, respectively, it is possible to efficiently capture the solid objects.

### [Item 9]

The battery pack according to any one of items 1 to 8, further including a pressure relief device provided on the casing so as to cover the outlet.

As the wall portions capture the solid objects, it is possible to reduce the amount of the solid objects that deposit in the pressure relief device.

### [Item 10]

A vehicle including the battery pack according to any one of items 1 to 9.

Thus, when solid objects derived from the constituents of the battery cells occur in the battery pack mounted on the vehicle, it is possible to capture those solid objects in the casing.

The battery pack according to an embodiment of the present invention includes the first wall portion that extends from the first surface of the casing where the outlet is located. The first wall portion is shaped so as to extend in a direction away from the first surface of the casing while extending toward the upstream side of the first gas passageway. When solid objects derived from the constituents of the battery cells occur, it is possible to capture those solid objects by the first wall portion.

Many components are required to be arranged inside the casing of the battery pack. Therefore, the interval can be small between the first surface of the casing opposing the battery module and the battery module. The length of the first surface of the casing in the width direction is larger relative to the interval. With the length of the first surface of the casing in the width direction being large, the length of the root portion of the wall portion fixed to the first surface can be made large, thereby increasing the rigidity of the wall portion. For example, if the wall portion has a cantilevered structure, the length of the fixed end that is fixed to the first surface of the casing can be made large, thereby increasing the rigidity of the wall surface. Therefore, even under conditions where high stress is applied to the wall portion due to the movement of the gas and the solid objects, it is possible to suppress distortion of the wall portion and efficiently capture the solid objects.

With the provision of the wall portion for capturing the solid objects in the casing of the battery pack, it is possible to efficiently capture the solid objects with a simple structure. Since there is no need to provide relatively large components such as an exhaust duct in the casing, it is possible to increase the degree of freedom in the arrangement of components in the casing and reduce the size of the battery pack.

### BRIEF DESCRIPTION OF THE DRAWINGS

FIG. **1** is a left side view showing an electric vehicle **1** according to an embodiment.
FIG. **2** is a left side view showing a battery pack **3** according to an embodiment.
FIG. **3** is a left side view showing, on an enlarged scale, a part of the battery pack **3** according to an embodiment.
FIG. **4** is a left side view showing, on an enlarged scale, a part of the battery pack **3** according to an embodiment.
FIG. **5** is a perspective view showing a front wall **31f,** a baffle plate **61,** a first wall portion **51** and a second wall portion **52** of a casing **31** according to an embodiment.
FIG. **6** is a view showing an example of a first wall portion **51** provided with ribs **521** according to an embodiment.
FIG. **7** is a left side view showing another example of the battery pack **3** according to an embodiment.
FIG. **8** is a left side view showing, on an enlarged scale, a part of another example of the battery pack **3** according to an embodiment.
FIG. **9** is a left side view showing, on an enlarged scale, a part of another example of the battery pack **3** according to an embodiment.
FIG. **10** is a perspective view showing the front wall **31f,** a first wall portion **51a** and a third wall portion **53a** of the casing **31** according to an embodiment.
FIG. **11** is a view showing the first wall portion **51a** according to an embodiment.
FIG. **12** is a view showing the third wall portion **53a** according to an embodiment.

### EMBODIMENTS OF THE INVENTION

An embodiment of the present invention will now be described with reference to the drawings. Like elements are denoted by like reference signs, and will not be described redundantly. The terms front, rear, up, down, left and right, as used in the description below, refer to these directions as seen from a passenger seated on a seat of an electric vehicle. The designations F, Re, L, R, U and D, as used in the figures, refer to front, rear, left, right, up and down, respectively. The embodiment to be described below is illustrative, and the present invention is not limited to the following embodiment.

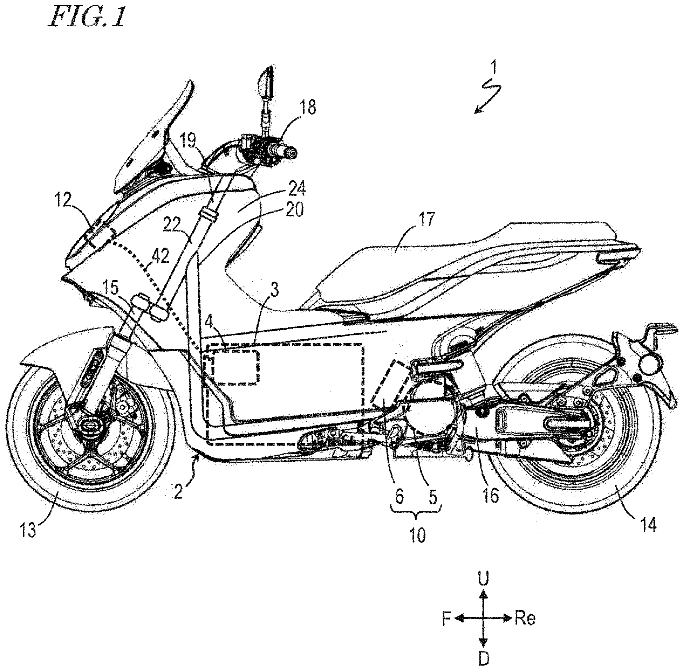

FIG. **1** is a left side view showing an electric vehicle **1,** which is an example of a vehicle according to an embodiment of the present embodiment. The electric vehicle **1** is, for example, a straddled vehicle. In the example shown in FIG. **1****,** an electric vehicle **1** is a scooter-type electric two-wheeled vehicle. The electric vehicle **1** according to an embodiment of the present invention is not limited to a scooter-type electric two-wheeled vehicle as illustrated herein. The electric vehicle **1** according to an embodiment of the present invention may be any other type of an electric two-wheeled vehicle, including so-called on-road, off-road and moped-type electric two-wheeled vehicles. A straddled vehicle means any vehicle that is straddled by a passenger, and is not limited to a two-wheeled vehicle. A straddled vehicle may be a type of a three-wheeled vehicle (LMW) that changes its direction of travel by tilting the vehicle body, or any other type of an electric vehicle, such as an ATV (All Terrain Vehicle). The electric vehicle **1** may be an electric vehicle other than a straddled vehicle. The electric vehicle **1** may be a vehicle with four or more wheels.

As shown in FIG. **1****,** the electric two-wheeled vehicle **1** includes a vehicle body **2,** a battery pack **3,** a charger **4,** a drive unit **10,** a front wheel **13** and a rear wheel **14.** In order to clearly illustrate the configuration of the electric two-wheeled vehicle **1,** FIG. **1** shows, in a see-through manner, a part of the interior of the electric two-wheeled vehicle **1.**

The vehicle body **2** has a structure including a vehicle body frame **20** and a vehicle body cover **24.** The vehicle body frame **20** includes a head pipe **22.** A steering shaft **19** is inserted into the head pipe **22.** A front fork **15** is provided at the lower end of the steering shaft **19.** The front fork **15** is capable of rotating left and right about the center of the steering shaft **19** inserted in the head pipe **22.** The front wheel **13** is rotatably supported at the lower end portion of the front fork **15.** A steering handle **18** is provided at the upper end of the steering shaft **19.**

The rear portion of the vehicle body **2** swingably supports a swing arm **16.** The rear wheel **14** is rotatably supported by the swing arm **16.** In this example, the driven wheel is the rear wheel **14** and the non-driven wheel is the front wheel **13.** A seat **17,** on which the passenger is seated, is provided in the upper portion of the vehicle body **2.**

The battery pack **3** is arranged at a position between the front wheel **13** and the rear wheel **14** in the vehicle front-rear direction of the vehicle **1.** The drive unit **10** is arranged rearward of the battery pack **3.** The drive unit **10** includes an electric motor **5** and a motor control unit (MCU) **6** that controls the operation of the electric motor **5.** The battery pack **3** supplies electric power to operate the electric motor **5.** The MCU **6** generates the drive current from the output current of the battery pack **3** and outputs the drive current to the electric motor **5.** The rotation generated by the electric motor **5** is transmitted to the rear wheel **14** via a belt-driven power transmission mechanism, for example, thereby causing the electric two-wheeled vehicle **1** to travel. The rotation generated by the electric motor **5** may be transmitted to the rear wheel **14** via a chain-driven or shaft-driven power transmission mechanism.

An AC charging port **12** is provided at the front portion of the vehicle body **2.** A charger **4** is arranged on the side of the battery pack **3.** The AC charging port **12** includes a receptacle to or from which a connector (plug) of an external power source outputting an alternating current for charging the battery pack **3** can be attached or detached, and receives alternating current output from an external power source. The AC charging port **12** is connected to the charger **4** via a harness **42.** When charging the battery pack **3,** the alternating current output from the external power source is supplied to the charger **4** via the AC charging port **12.** The charger **4** converts the alternating current to direct current and outputs the current to the battery pack **3.** The direct current output from the charger **4** is supplied to the battery pack **3** via a harness, for example.

The vehicle body **2** may be provided with a DC charging port that receives the direct current output from the external power source. In this case, the direct current output from the external power source is supplied to the battery pack **3** via a DC charging port **11** to charge the battery pack **3.**

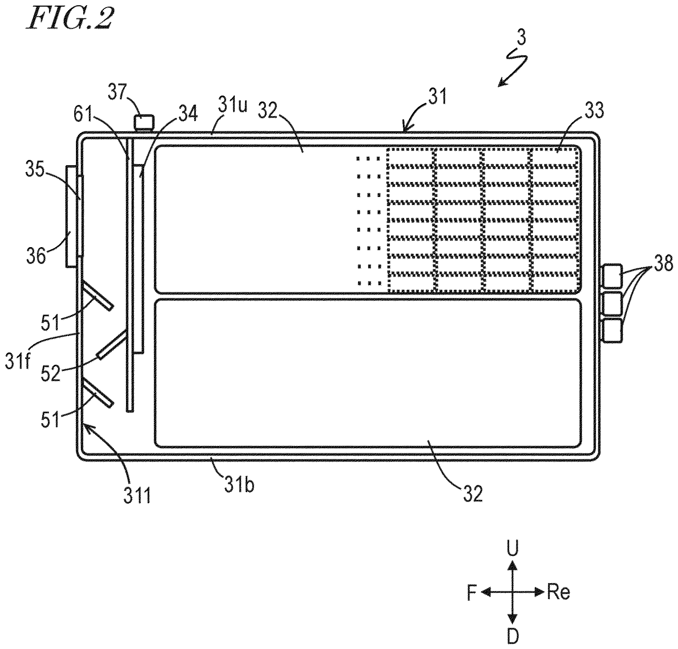

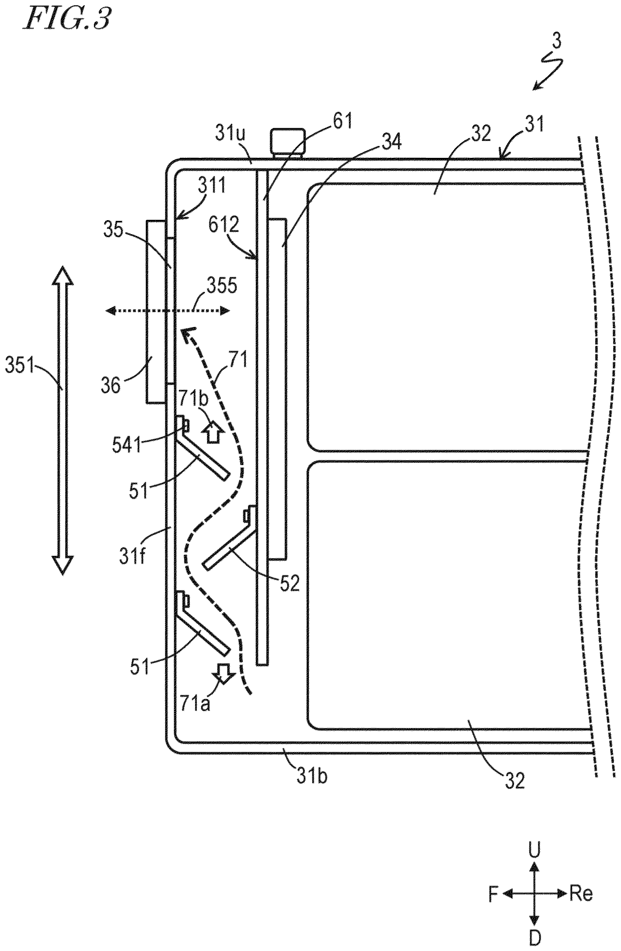

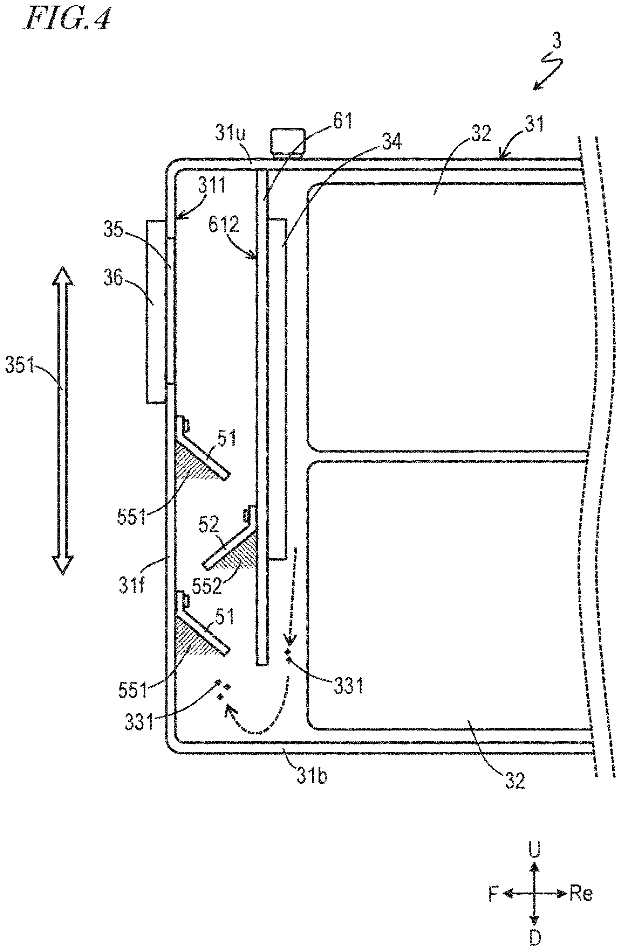

FIG. **2** is a left side view of the battery pack **3.** FIG. **3** and FIG. **4** are left side views each showing, on an enlarged scale, a part of the battery pack **3.** FIG. **2****,** FIG. **3** and FIG. **4** show the interior of the battery pack **3.**

The battery pack **3** includes a casing **31,** a battery module **32** and a battery management system (BMS) **34.** The casing **31** houses the battery module **32** and the BMS **34.** The number of battery modules **32** provided by the battery pack **3** may be any number, and one or more battery modules **32** are housed in the casing **31.** Each of the battery modules **32** includes a plurality of battery cells **33.** The number of battery cells **33** included by each battery module **32** may be any number.

The BMS **34** controls the operation of the battery pack **3,** such as the charging operation and the discharging operation of the battery pack **3.** The casing **31** is provided with connectors **37** and **38.** A harness that connects together the battery pack **3** and the charger **4** is connected to the connector **37.** A harness that connects together the battery pack **3** and the MCU **6** is connected to the connector **38.**

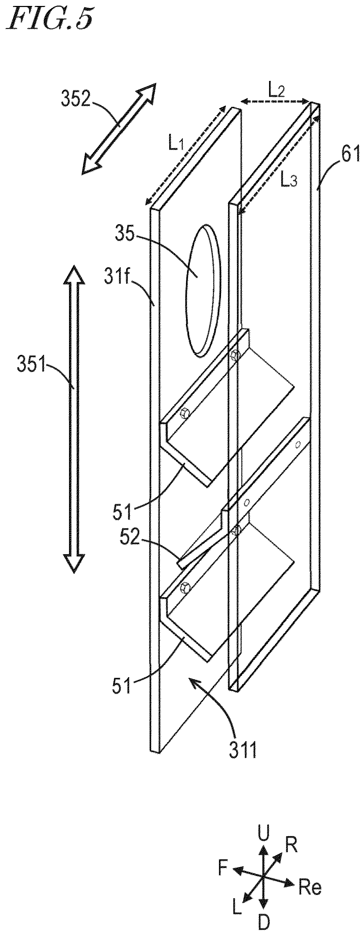

An outlet **35** through which to discharge the gas inside the casing **31** to the outside is provided on a front wall **31f** of the casing **31.** For the purpose of explanation of the configuration of the battery pack **3,** the side of the battery pack **3** on which the outlet **35** is provided will be described in the present embodiment as the front side. For the purpose of explanation, the longitudinal direction **351** of the front wall **31f** will be described as the up-down direction, and the width direction **352** (FIG. **5**) perpendicular to the longitudinal direction **351** will be described as the left-right direction.

A pressure relief device (PRD) **36** is provided on the front wall **31F** of the casing **31** so as to cover the outlet **35.** When the pressure inside the battery cells **33** increases, gas may be discharged from the battery cells **33.** The gas discharged from the battery cells **33** is discharged to the outside of the battery pack **3** through the outlet **35** and the pressure relief device **36.**

A first surface **311,** which is an inner surface of the front wall **31f** of the casing **31,** opposes the battery module **32.** The battery module **32** is arranged with an interval from the first surface **311** so as to form a gas passageway between the first surface **311** and the battery module **32.** The gas passageway is a channel for flowing gas discharged from the battery cells **33.**

In the example shown in FIG. **2** to FIG. **4****,** a baffle plate (obstruction plate) **61** is arranged between the first surface **311** of the casing **31** and the battery module **32.** The baffle plate **61** extends downward from an upper wall **31u** of the casing **31.** A gap is provided between the lower end portion of the baffle plate **61** and a bottom wall **31b** of the casing **31.** As shown in FIG. **3****,** a gas passageway (the first gas passageway) **71** for flowing the gas discharged from the battery cells **33** is formed between the first surface **311** of the casing **31** and the baffle plate **61.** The gas discharged from the battery cells **33** can reach the outlet **35** through the gas passageway **71.**

The battery pack **3** includes a first wall portion **51** extending from the first surface **311** of the casing **31.** The battery pack **3** further includes a second wall portion **52** extending from a second surface **612** of the baffle plate **61** opposing the first surface **311.**

The first wall portion **51** is fixed to the front wall **31f** using a fastener **541** such as a bolt, for example. The first wall portion **51** may be formed integrally with the front wall **31f.** The second wall portion **52** is fixed to the baffle plate **61** using the fastener **541** such as a bolt, for example. The second wall portion **52** may be formed integrally with the baffle plate **61.**

FIG. **5** is a perspective view showing the front wall **31f,** the baffle plate **61,** the first wall portion **51** and the second wall portion **52** of the casing **31.** In order to clearly show the shape of the first wall portion **51** and the second wall portion **52,** FIG. **5** shows the baffle plate **61** in a see-through manner.

As shown in FIG. **2** to FIG. **5****,** the first wall portion **51** is shaped so as to extend away from the first surface **311** while extending toward the upstream side of the gas passageway **71.** Here, the arrow **71a** shown in FIG. **3** indicates the upstream side of the gas passageway **71,** and the arrow **71b** indicates the downstream side of the gas passageway **71.** In plan view as seen from the width direction (the left-right direction) of the first surface **311** of the casing **31,** the first wall portion **51** is shaped so as to extend in a direction diagonal to the axial direction **355** (FIG. **3****)** of the outlet **35** and away from the first surface **311.** The first wall portion **51** is arranged so as to provide a gap between the first wall portion **51** and the baffle plate **61.**

The second wall portion **52** is shaped so as to extend in a direction away from the second surface **612** of the baffle plate **61** while extending toward the upstream side of the gas passageway **71.** The second wall portion **52** is arranged so as to provide a gap between the second wall portion **52** and the first surface **311.** In the longitudinal direction **351** of the first surface **311** of the casing **31,** the first wall portion **51** and the second wall portion **52** are arranged staggered from each other.

The first wall portion **51** and the second wall portion **52** each extend in the width direction **352** (FIG. **5**). The left end portions of the first wall portion **51** and the second wall portion **52** are in contact with the left side wall of the casing **31.** The right end portions of the first wall portion **51** and the second wall portion **52** are in contact with the right side wall of the casing **31.** The baffle plate **61** extends in the width direction **352,** and the left end portion of the baffle plate **61** is in contact with the left side wall of the casing **31** and the right end portion thereof is in contact with the right side wall of the casing **31.**

As described above, when the pressure inside the battery cells **33** increases, gas may be discharged from the battery cells **33.** Also, when the pressure inside the battery cells **33** increases, solid objects **331** (FIG. **4**) such as particulate matter derived from the constituents of the battery cells **33** may be discharged together with the gas from the battery cells **33.** As the gas generated from the battery cells **33** flows toward the outlet **35,** such solid objects **331** may move together with the gas toward the outlet **35.** In the present embodiment, the solid objects **331** moving toward the outlet **35** are captured by the first wall portion **51** and the second wall portion **52.**

The baffle plate **61** is arranged between the first surface **311** of the casing **31** and the battery module **32.** With the arrangement of the baffle plate **61,** it is possible to guide the gas and the solid objects **331** generated from the battery cells **33** to a location where the first wall portion **51** and the second wall portion **52** are arranged. It is possible to prevent the moving solid objects **331** from heading directly to the outlet **35** without passing through the location where the first wall portion **51** and the second wall portion **52** are arranged to capture those solid objects **331.**

Although the solid objects **331** are urged to move together with the gas along the gas passageway **71,** since the solid objects **331** have a relatively large mass and are subject to relatively large inertia force, the solid objects **331** cannot easily change their direction of travel and are captured by the first wall portion **51** and the second wall portion **52.**

The first wall portion **51** is shaped so as to extend away from the first surface **311** of the casing **311** while extending toward the upstream side of the gas passageway **71.** With this shape, the solid objects **331** can be captured in the space **551** formed between the first surface **311** of the casing **31** and the first wall portion **51** (the hatched area in FIG. **4**). The second wall portion **52** is shaped so as to extend away from the second side **612** of the baffle plate **61** while extending toward the upstream side of the gas passageway **71.** The solid objects **331** can be captured in the space **552** formed between the second surface **612** of the baffle plate **61** and the second wall portion **52** (the hatched area in FIG. **4**).

The first wall portion **51** and the second wall portion **52** extend in different directions and are arranged staggered from each other in the longitudinal direction **351.** By meandering the gas passageway **71,** it is possible to efficiently capture the solid objects **331,** which have a relatively large mass and are difficult to change their direction of travel.

Many components are required to be arranged inside the casing **31** of the battery pack **3.** Therefore, the interval **L₂** (FIG. **5**) can be small between the first surface **311** of the casing **31** opposing the battery module **32** and the battery module **32.** The length **L₁** of the first surface **311** of the casing **31** in the width direction **352** is larger relative to the interval **L₂.** With the length **L₁** of the first surface **311** in the width direction **352** being large, the length of the root portion of the first wall portion **51** fixed to the first surface **311** can be made large, thereby increasing the rigidity of the first wall portion **51.** For example, if the first wall portion **51** has a cantilevered structure, the length of the fixed end that is fixed to the first surface **311** can be made large, thereby increasing the rigidity of the wall surface. Therefore, even under conditions where high stress is applied to the first wall portion **51** due to the movement of the gas and the solid objects **331,** it is possible to suppress distortion of the first wall portion **51** and efficiently capture the solid objects **331.**

The length **L₃** of the baffle plate **61** in the width direction (the left-right direction) is also larger relative to the interval **L₂.** Therefore, the length of the root portion of the second wall portion **52** fixed to the second surface **612** of the baffle plate **61** can be made large, and it is possible to increase the rigidity of the second wall portion **52** as with the first wall portion **51.**

In the present embodiment, with the provision of the first wall portion **51** for capturing the solid objects **331** in the casing **31** of the battery pack **3,** it is possible to efficiently capture the solid objects **331** with a simple structure. Since there is no need to provide relatively large components such as an exhaust duct in the casing **31,** it is possible to increase the degree of freedom in the arrangement of components in the casing **31** and reduce the size of the battery pack **3.**

In the example shown in FIG. **2** to FIG. **5****,** two first wall portions **51** and one second wall portion **52** are provided in the casing **31,** but there is no limitation on the number of those wall portions. The number of first wall portions **51** and the number of second wall portions **52** are arbitrary, and one or more first wall portions **51** and one or more second wall portions **52** may be provided.

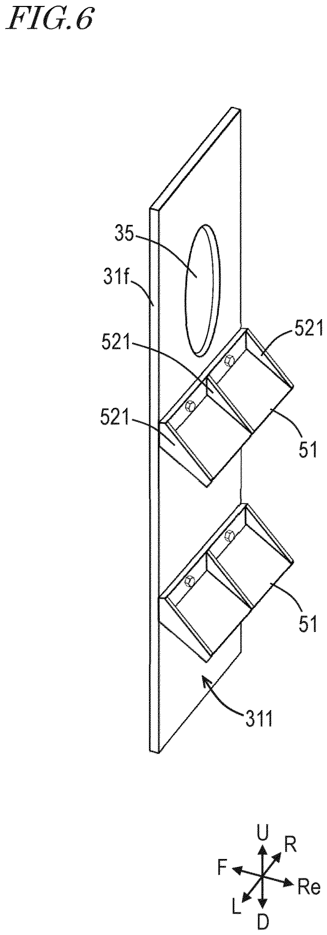

The first wall portion **51** may be provided with ribs in order to further increase the rigidity of the first wall portion **51.** FIG. **6** shows an example of the first wall portion **51** provided with ribs **521.** By providing the ribs **521** on the first wall portion **51,** it is possible to further increase the rigidity of the first wall portion **51.** The second wall portion **52** may be provided with ribs. Then, it is possible to further increase the rigidity of the second wall portion **52.**

In the example shown in FIG. **2** to FIG. **5****,** the BMS **34** is provided on the baffle plate **61.** Supporting the BMS **34** by the baffle plate **61** eliminates the need to provide an additional member to support the BMS **34,** and it is possible to improve the degree of freedom in the arrangement of components in the casing **31.**

Next, another example of the battery pack **3** of the present embodiment will be described.

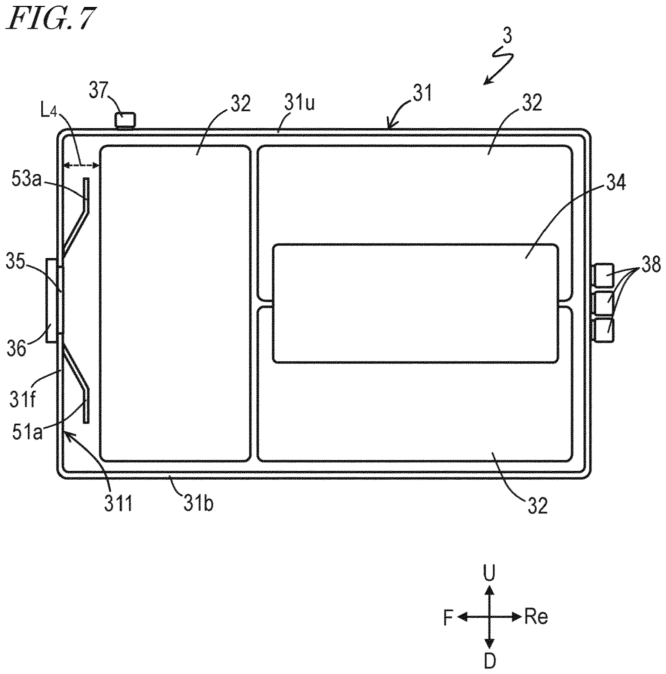

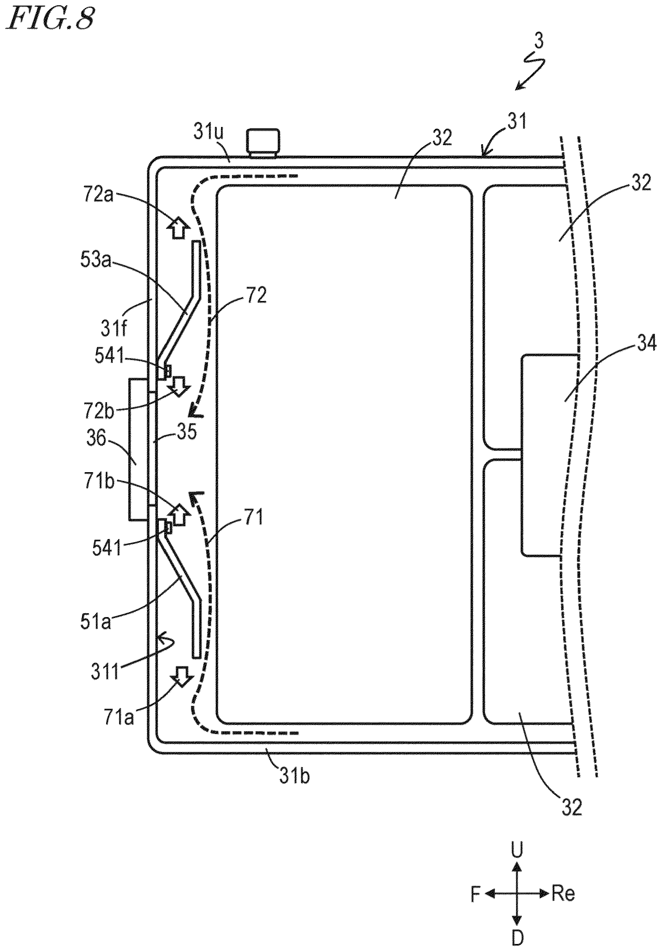

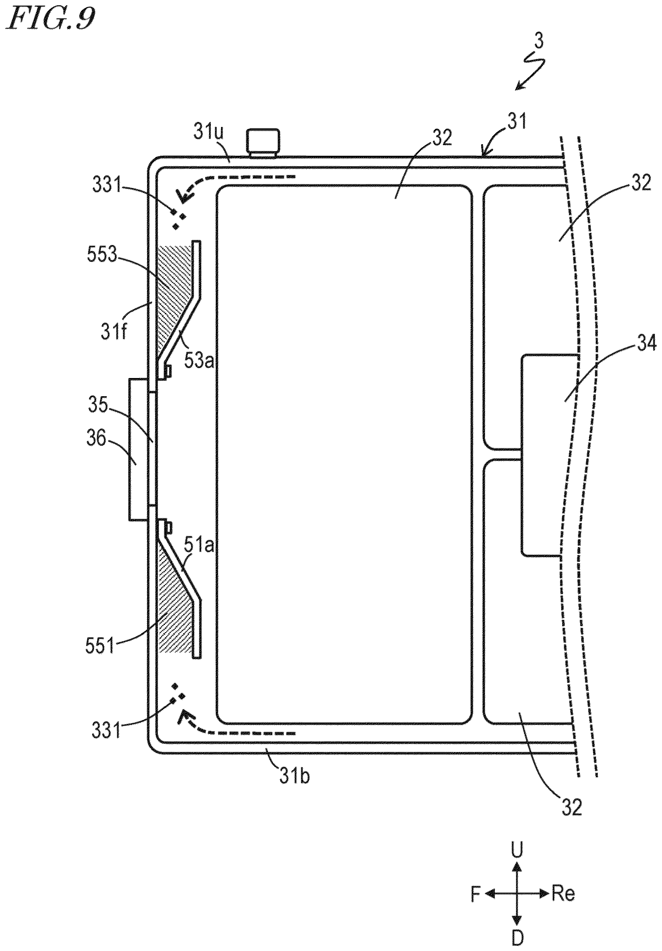

FIG. **7** is a left side view showing the battery pack **3** of another example. FIG. **8** and FIG. **9** are left side views showing, on an enlarged scale, a part of the battery pack **3** of another example. FIG. **7****,** FIG. **8** and FIG. **9** show the interior of the battery pack **3.**

The first surface **311** of the casing **31** opposes the battery module **32.** The battery module **32** is arranged with an interval from the first surface **311** so as to form gas passageways **71, 72** (FIG. **8****)** between the first surface **311** and the battery module **32.**

The gas passageway (the second gas passageway) **72** has a different direction of gas flow than the gas passageway **71.** For example, the gas passageway **71** is a passageway in which gas travels in the upward direction in the casing **31,** and the gas passageway **72** is a passageway in which gas travels in the downward direction in the casing **31.** The gas discharged from the battery cells **33** can reach the outlet **35** through the gas passageways **71** and **72.** By providing a plurality of gas passageways to guide the gas discharged from the battery cells **33** to the outlet **35,** it is possible to efficiently guide the gas to the outlet **35.**

The battery pack **3** includes a first wall portion **51a** and a third wall portion **53a** extending from the first surface **311** of the casing **31.** The first wall portion **51a** and the third wall portion **53a** are fixed to the front wall **31f** using the fastener **541** such as a bolt, for example. The first wall portion **51a** and the third wall portion **53a** may be formed integrally with the front wall **31f.**

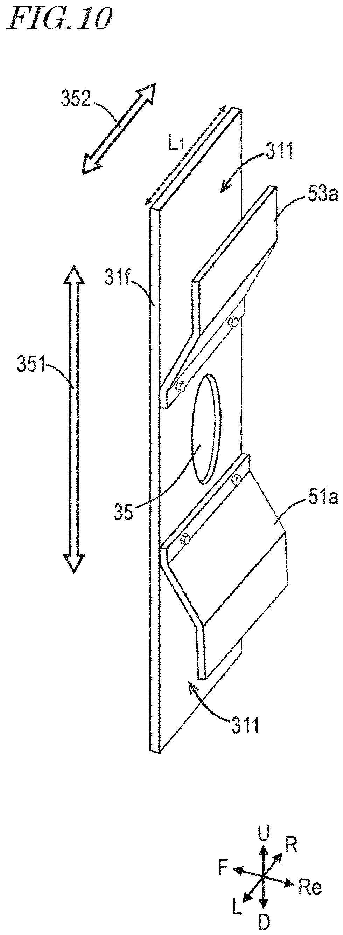

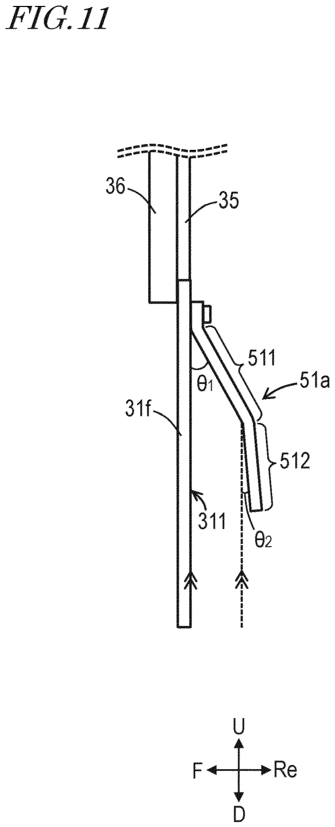

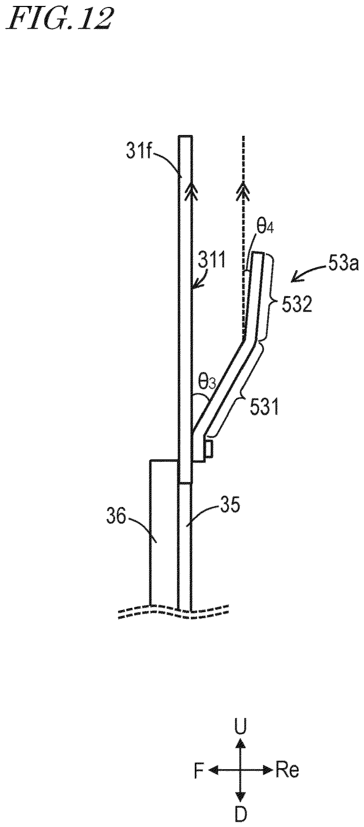

FIG. **10** is a perspective view showing the front wall **31f,** the first wall portion **51a** and the third wall portion **53a** of the casing **31.** FIG. **11** is a view showing the first wall portion **51a.** FIG. **12** is a view showing the third wall portion **53a.**

As shown in FIG. **7** to FIG. **12****,** the first wall portion **51a** is shaped so as to extend away from the first surface **311** while extending toward the upstream side of the gas passageway **71.** The arrow **71a** shown in FIG. **8** indicates the upstream side of the gas passageway **71** and the arrow **71b** indicates the downstream side of the gas passageway **71.** The first wall portion **51a** is arranged so as to provide a gap between the first wall portion **51a** and the battery module **32.**

As shown in FIG. **11****,** the first wall portion **51a** includes a first portion **511** and a second portion **512.** The first portion **511** is shaped such that one end thereof extends from the first surface **311** of the casing **31** and so as to extend away from the first surface **311** while extending toward the upstream side of the gas passageway **71.** The second portion **512** is shaped so as to extend from the other end of the first portion **511** in a direction toward the upstream side of the gas passageway **71.** The inclination of the second portion **512** relative to the first surface **311** is smaller than the inclination of the first portion **511** relative to the first surface **311.** In other words, the angle θ₂ formed by the first surface **311** and the second portion **512** is smaller than the angle θ₁ formed by the first surface **311** and the first portion **511** in plan view as seen from the width direction of the first surface **311** (the left-right direction). The direction in which the second portion **512** extends may be parallel to the first surface **311.** With the first wall portion **51a** having the first portion **511** and the second portion **512,** it is possible to increase the space **551** (FIG. **9****)** to capture the solid objects **331.**

As shown in FIG. **7** to FIG. **12****,** the third wall portion **53a** is shaped so as to extend away from the first surface **311** while extending toward the upstream side of the gas passageway **72.** The arrow **72a** shown in FIG. **8** indicates the upstream side of the gas passageway **72** and the arrow **72b** indicates the downstream side of the gas passageway **72.** The third wall portion **53a** is arranged so as to provide a gap between the third wall portion **53a** and the battery module **32.**

As shown in FIG. **12****,** the third wall portion **53a** includes a first portion **531** and a second portion **532.** The first portion **531** is shaped such that one end thereof extends from the first surface **311** of the casing **31** and so as to extend away from the first surface **311** while extending toward the upstream side of the gas passageway **72.** The second portion **532** is shaped so as to extend from the other end of the first portion **531** in a direction toward the upstream side of the gas passageway **72.** The inclination of the second portion **532** relative to the first surface **311** is smaller than the inclination of the first portion **531** relative to the first surface **311.** In other words, the angle **θ₄** formed by the first surface **311** and the second portion **532** is smaller than the angle θ₃ formed by the first surface **311** and the first portion **531** in plan view as seen from the width direction of the first surface **311** (the left-right direction). The direction in which the second portion **532** extends may be parallel to the first surface **311.** With the third wall portion **53a** having the first portion **531** and the second portion **532,** it is possible to increase the space **553** (FIG. **9**) to capture the solid objects **331.**

The first wall portion **51a** and the third wall portion **53a** each extend in the width direction **352** (FIG. **10**). The left end portions of the first wall portion **51a** and the third wall portion **53a** are in contact with the left side wall of the casing **31.** The right end portions of the first wall portion **51a** and the third wall portion **53a** are in contact with the right side wall of the casing **31.**

In this example, when the solid objects **331** (FIG. **9****)** are discharged from the battery cells **33,** the solid objects **331** moving toward the outlet **35** are captured by the first wall portion **51a** and the third wall portion **53a.** Although the solid objects **331** are urged to move together with the gas along the gas passageways **71** and **72,** since the solid objects **331** have a relatively large mass and are subject to relatively large inertia force, the solid objects **331** cannot easily change their direction of travel and move generally along the first surface **311,** and are captured by the first wall portion **51a** and the third wall portion **53a.**

Since many components are required to be arranged inside the casing **31** of the battery pack **3,** the interval **L₄** (FIG. **7**) can be small between the first surface **311** of the casing **31** and the battery module **32.** The length **L₁** (FIG. **10****)** of the first surface **311** of the casing **311** in the width direction **352** is relatively larger than the interval **L₄**. With the length **L₁** of the first surface **311** in the width direction **352** being large, the length of the root portions of the first wall portion **51a** and the third wall portion **53a** fixed to the first surface **311** can be made large, thereby increasing the rigidity of the first wall portion **51a** and the third wall portion **53a.**

With the provision of the first wall portion **51a** and the third wall portion **53a** in the casing **31** of the battery pack 3 for capturing the solid objects **331,** it is possible to efficiently capture the solid objects **331** with a simple structure. Since there is no need to provide relatively large components such as an exhaust duct in the casing **31,** it is possible to increase the degree of freedom in the arrangement of components in the casing **31** and reduce the size of the battery pack **3.**

In the example shown in FIG. **7** to FIG. **10****,** one first wall portion **51a** and one third wall portion **53a** are provided in the casing **31,** but there is no limitation on the number of those wall portions. The number of first wall portions **51a** and the number of third wall portions **53a** are arbitrary, and one or more first wall portions **51a** and one or more third wall portions **53a** may be provided. The first wall portion **51a** and the third wall portion **53a** may be provided with ribs in order to further increase the rigidity of the first wall portion **51a** and the third wall portion **53a.**

The shape of the first wall portion **51a** and the third wall portion **53a** may be the shape of the first wall portion **51** shown in FIG. **2** to FIG. **5****.** The shape of the first wall portion **51** and the second wall portion **52** may be a shape that includes the first portion **511** and the second portion **512** (FIG. **11****)** as with the first wall portion **51a.**

Although the battery pack **3** is arranged in the electric vehicle **1** so that the longitudinal direction **351** of the front wall **31f** of the casing **31** is the up-down direction of the electric vehicle **1** in the embodiment described above, the arrangement of the battery pack **3** is not limited to this. For example, the battery pack **3** may be arranged in the electric vehicle **1** so that the longitudinal direction **351** of the front wall **31f** is the left-right direction of the electric vehicle **1.** In this case, the walls **31u** and **31b** of the casing **31** are side walls of the casing **31.**

Although the vehicle **1** on which the battery pack **3** is mounted is a vehicle in the embodiment described above, it is not limited to a vehicle in the present invention, but may be a ship, an aircraft, a robot, etc., driven by an electric motor. The present invention is also applicable to hybrid systems that use both an electric motor and an internal combustion engine. The vehicle **1** is not limited to transportation machines in which people ride, but may be transportation machines that operate unmanned. The present invention can be applied to machines that operate using battery packs.

Illustrative embodiments of the present invention have been described above. The present specification discloses a battery pack and a vehicle as set forth in the following items.

### [Item 1]

A battery pack **3** including:
a battery module **32;**
a casing **31** that houses the battery module **32,** wherein:
   the battery module **32** is arranged with an interval from a first surface **311** of the casing **31** opposing the battery module **32** so as to form a first gas passageway **71** between the battery module **32** and the first surface **311** of the casing **31;**
   an outlet **35** through which to discharge gas inside the casing **31** to outside is located on the first surface **311** of the casing **31;** and
   the battery pack **3** further includes a first wall portion **51** extending from the first surface **311** of the casing **31** where the outlet **35** is located, the first wall portion **51** being shaped so as to extend in a direction away from the first surface **311** while extending toward an upstream side of the first gas passageway **71.**

The battery pack **3** according to an embodiment of the present invention includes the first wall portion **51** that extends from the first surface **311** of the casing **31** where the outlet **35** is located. The first wall portion **51** is shaped so as to extend in a direction away from the first surface **311** of the casing **31** while extending toward the upstream side of the first gas passageway **71.** When solid objects **331** derived from the constituents of the battery cells **33** occur, it is possible to capture those solid objects **331** by the first wall portion **51.**

Many components are required to be arranged inside the casing **31** of the battery pack **3.** Therefore, the interval **L₂** can be small between the first surface **311** of the casing **31** opposing the battery module **32** and the battery module **32.** The length **L₁** of the first surface **311** of the casing **31** in the width direction is larger relative to the interval **L₂.** With the length **L₁** of the first surface **311** of the casing **31** in the width direction being large, the length of the root portion of the wall portion **51** fixed to the first surface **311** can be made large, thereby increasing the rigidity of the wall portion **51.** For example, if the wall portion **51** has a cantilevered structure, the length of the fixed end that is fixed to the first surface **311** of the casing **31** can be made large, thereby increasing the rigidity of the wall surface. Therefore, even under conditions where high stress is applied to the wall portion **51** due to the movement of the gas and the solid objects **331,** it is possible to suppress distortion of the wall portion **51** and efficiently capture the solid objects **331.**

With the provision of the wall portion **51** for capturing the solid objects **331** in the casing **31** of the battery pack **3,** it is possible to efficiently capture the solid objects **331** with a simple structure. Since there is no need to provide relatively large components such as an exhaust duct in the casing **31,** it is possible to increase the degree of freedom in the arrangement of components in the casing **31** and reduce the size of the battery pack **3.**

### [Item 2]

The battery pack **3** according to item 1, wherein:
in plan view as seen from a width direction of the first surface **311** of the casing **31,**
the first wall portion **51** is shaped so as to extend in a direction diagonal to an axial direction **355** of the outlet **35** and away from the first surface **311.**

Thus, solid objects **331** that move through the first gas passageway **71** can be captured by the first wall portion **51.**

### [Item 3]

The battery pack **3** according to item 1 or 2, wherein the first wall portion **51** includes:
a first portion **511** shaped such that one end thereof extends from the first surface **311** of the casing **31** and so as to extend away from the first surface **311** while extending toward the upstream side of the first gas passageway **71;** and
a second portion **512** that extends from the other end of the first portion **511** in a direction toward the upstream side of the first gas passageway **71,** with inclination of the second portion **512** relative to the first surface **311** being smaller than inclination of the first portion **511** relative to the first surface **311.**

Thus, it is possible to increase the space **551** to capture the solid objects **331.**

### [Item 4]

The battery pack **3** according to any one of items 1 to 3, further including:
a baffle plate **61** arranged between the battery module **32** and the first surface **311** of the casing **31,** wherein:
the first gas passageway **71** is formed between the baffle plate **61** and the first surface **311** of the casing **31;** and
the first wall portion **51** is arranged so as to provide a gap between the first wall portion **51** and the baffle plate **61.**

Thus, it is possible to prevent the solid objects **331** discharged from the battery module **32** from heading directly to the outlet **35** without passing through the location where the first wall portion **51** is arranged to capture those solid objects **331.** It is possible to guide those solid objects **331** to a location where the first wall portion **51** is arranged.

### [Item 5]

The battery pack **3** according to item 4, further including a second wall portion **52** that extends from a second surface **612** of the baffle plate **61** opposing the first surface **311** of the casing **31,** wherein the second wall portion **52** is shaped so as to extend away from the second surface **612** while extending toward the upstream side of the first gas passageway **71** and is provided so as to provide a gap between the second wall portion **52** and the first surface **311** of the casing **31.**

As the solid objects **331** are captured by means of both the first wall portion **51** and the second wall portion **52,** which extend in different directions, it is possible to more efficiently capture the solid objects **331.**

### [Item 6]

The battery pack **3** according to item 5, wherein the first wall portion **51** and the second wall portion **52** are arranged staggered from each other in a longitudinal direction **351** of the first surface **311** of the casing **31.**

Thus, it is possible to efficiently capture the solid objects **331,** which have a relatively large mass and are difficult to change their direction of travel.

### [Item 7]

The battery pack **3** according to any one of items 4 to 6, wherein:
a control device **34** that controls an operation of the battery pack **3,**
wherein the control device **34** is provided on the baffle plate **61.**

Thus, the control device **34** can be supported by the baffle plate **61.**

### [Item 8]

The battery pack **3** according to any one of items 1 to 3, wherein:
a second gas passageway **72,** separate from the first gas passageway **71,** is further formed between the first surface **311** of the casing **31** and the battery module **32,** wherein the second gas passageway **72** has a different direction of gas flow than the first gas passageway **71;** and
the battery pack **3** further includes a third wall portion **53** that extends from the first surface **311** of the casing **31** where the outlet **35** is located, the third wall portion **53** being shaped so as to extend in a direction away from the first surface **311** while extending toward the upstream side of the second gas passageway **72.**

By providing a plurality of gas passageways **71** and **72** to guide the gas inside the casing **31** to the outlet **35,** it is possible to efficiently guide the gas in the casing **31** to the outlet **35.**

By arranging wall portions **51** and **53** in the first gas passageway **71** and the second gas passageway **72,** respectively, it is possible to efficiently capture the solid objects **331.**

### [Item 9]

The battery pack **3** according to any one of items 1 to 8, further including a pressure relief device **36** provided on the casing **31** so as to cover the outlet **35.**

As the wall portions capture the solid objects **331,** it is possible to reduce the amount of the solid objects **331** that deposit in the pressure relief device **36.**

### [Item 10]

A vehicle **1** including the battery pack **3** according to any one of items 1 to 9.

Thus, when solid objects **331** derived from the constituents of the battery cells **33** occur in the battery pack **3** mounted on the vehicle **1,** it is possible to capture those solid objects **331** in the casing **31.**

The present invention is particularly useful in the field of machines that operate using battery packs.

## Claims

1. A battery pack (3) comprising:
a battery module (32);
a casing (31) that houses the battery module (32), wherein:
the battery module (32) is arranged with an interval from a first surface (311) of the casing (31) opposing the battery module (32) so as to form a first gas passageway (71) between the battery module (32) and the first surface (311) of the casing (31);
an outlet (35) through which to discharge gas inside the casing (31) to outside is located on the first surface (311) of the casing (31); and
the battery pack (3) further includes a first wall portion (51) extending from the first surface (311) of the casing (31) where the outlet (35) is located, the first wall portion (51) being shaped so as to extend in a direction away from the first surface (311) while extending toward an upstream side of the first gas passageway (71).

2. The battery pack according to claim 1, wherein:
in plan view as seen from a width direction of the first surface (311) of the casing (31),
the first wall portion (51) is shaped so as to extend in a direction diagonal to an axial direction (355) of the outlet (35) and away from the first surface (311).

3. The battery pack according to claim 1 or 2, wherein the first wall portion (51) includes:
a first portion (511) shaped such that one end thereof extends from the first surface (311) of the casing (31) and so as to extend away from the first surface (311) while extending toward the upstream side of the first gas passageway (71); and
a second portion (512) that extends from the other end of the first portion (511) in a direction toward the upstream side of the first gas passageway (71), with inclination of the second portion (512) relative to the first surface (311) being smaller than inclination of the first portion (511) relative to the first surface (311).

4. The battery pack according to any one of claims 1 to 3, further comprising:
a baffle plate (61) arranged between the battery module (32) and the first surface (311) of the casing (31), wherein:
the first gas passageway (71) is formed between the baffle plate (61) and the first surface (311) of the casing (31); and
the first wall portion (51) is arranged so as to provide a gap between the first wall portion (51) and the baffle plate (61) .

5. The battery pack according to claim 4, further comprising a second wall portion (52) that extends from a second surface (612) of the baffle plate (61) opposing the first surface (311) of the casing (31), wherein the second wall portion (52) is shaped so as to extend away from the second surface (612) while extending toward the upstream side of the first gas passageway (71) and is provided so as to provide a gap between the second wall portion (52) and the first surface (311) of the casing (31).

6. The battery pack according to claim 5, wherein the first wall portion (51) and the second wall portion (52) are arranged staggered from each other in a longitudinal direction (351) of the first surface (311) of the casing (31).

7. The battery pack according to any one of claims 4 to 6, further comprising:
a control device (34) that controls an operation of the battery pack (3),
wherein the control device (34) is provided on the baffle plate (61).

8. The battery pack according to any one of claims 1 to 3, wherein:
a second gas passageway (72), separate from the first gas passageway (71), is further formed between the first surface (311) of the casing (31) and the battery module (32), wherein the second gas passageway (72) has a different direction of gas flow than the first gas passageway (71); and
the battery pack (3) further includes a third wall portion (53) that extends from the first surface (311) of the casing (31) where the outlet (35) is located, the third wall portion (53) being shaped so as to extend in a direction away from the first surface (311) while extending toward the upstream side of the second gas passageway (72).

9. The battery pack according to any one of claims 1 to 8, further comprising a pressure relief device (36) provided on the casing (31) so as to cover the outlet (35).

10. A vehicle comprising the battery pack (3) according to any one of claims 1 to 9.
